# EUROPEAN PATENT APPLICATION

(11) **EP 4 599 920 A1**
(43) Date of publication of application: **13.08.2025**
(21) Application number: 24020051.9
(22) Date of filing: 06.02.2024
(51) Int. Cl.: B01D 53/14, F23J 15/00, C01B 32/50, B01D 53/62

(54) **METHOD FOR REMOVING CARBON DIOXIDE AND PROCESS PLANT NETWORK**

(71) Applicant: Linde GmbH, 82049 Pullach (DE)
(72) Inventor: Kamann, Martin, 82049 Pullach (DE); Matthes, Jörg, 82049 Pullach (DE); Opitz, Martin, 82049 Pullach (DE); Zander, Hans-Jörg, 82049 Pullach (DE)
(74) Representative: Lu, Jing

(57) **Abstract**

A method of recovering carbon dioxide from flue gases of a plurality of carbon dioxide emitters (1, 2, 3, 4) of a process plant network (100) is proposed, wherein the carbon dioxide emitters (1, 2, 3, 4) comprise individual flue gas ducts (11) operated at individual flue gas duct pressures, wherein each of the individual flue gas ducts (11) is connected via a pressure maintaining valve (13) to a common flue gas collecting duct (10), wherein each of the individual flue gas ducts (11) is connected via a flue gas flap (14) to an individual or common flue gas release unit (15), wherein the flue gas collecting duct (10) is connected to a carbon dioxide removal arrangement (20) including a flue gas blower (21), wherein the method comprises controlling flue gas duct pressures in the individual flue gas ducts (11) by operating the pressure maintaining valves (13) using flue gas duct pressure set values, the flue gas duct pressure set values corresponding to pressures required to release the respective flue gas via the individual or common flue gas release unit (15) at an opened state of the respective flue gas flap (14) to the atmosphere, and wherein the method further comprises adjusting a pressure in the flue gas collecting duct (10) by operating the flue gas blower (21). A process plant network (100) is also proposed.

## Description

### Field

The present disclosure relates to a method for removing carbon dioxide produced in a process plant network including a plurality of carbon dioxide emitters and to a corresponding process plant network.

### Background

Capturing carbon dioxide from combustion flue gases is known per se. As e.g. outlined in the article "Carbon Dioxide" in Ullmann's Encyclopedia of Industrial Chemistry, online publication 30 May 2014, DOI: 10.1002/14356007.a05_165.pub2, section 6.2, "Carbon Dioxide from Flue Gases", carbon dioxide is a component of all flue gases produced by the combustion of carbonaceous fuels.

For capturing carbon dioxide, flue gases are typically cleaned from particles and passed through a water scrubber and/or a flue gas desulphurisation system before they are classically subjected to a scrubbing step using e.g. an alkaline carbonate solution or an amine solution in order to absorb carbon dioxide. The present disclosure particularly pertains to amine scrubbers.

Flue gases are produced in process industries for example in furnaces or reactors in which heat at a high temperature level is required. Examples of such furnaces or reactors are reformers, steam crackers or fired process heaters and steam boilers. In large interconnected sites, comprising several furnaces or reactors, it may be advantageous to collect flue gas from several flue gas emitters and process a combined flue gas stream, such that individual units can be dispensed of.

However, such arrangements may be susceptible to malfunctions, as described hereinbelow, and therefore improved solutions are desired.

### Summary

Against this background, a method for removing carbon dioxide produced in a process plant network including a plurality of carbon dioxide emitters and a corresponding process plant network comprising the features of the independent claims are proposed herein. Embodiments are the subject of the dependent claims and of the description that follows hereinbelow.

The method provided herein is used for recovering carbon dioxide from flue gases of a plurality of carbon dioxide emitters of a process plant network. The carbon dioxide emitters comprise individual flue gas ducts operated at individual flue gas duct pressures. Each of the individual flue gas ducts is connected via a pressure maintaining valve to a common flue gas collecting duct. Each of the individual flue gas ducts is connected via a flue gas flap to an individual or common flue gas release unit. The flue gas collecting duct is connected to a carbon dioxide removal arrangement including a flue gas blower. The method comprises controlling flue gas duct pressures in the individual flue gas ducts by operating the pressure maintaining valves using flue gas duct pressure set values, the flue gas duct pressure set values corresponding to pressures required to release the respective flue gas via the individual or common flue gas release unit at an opened state of the respective flue gas flap, and a closed state of the respective pressure maintaining valve. The method further comprises adjusting a pressure in the flue gas collecting duct by operating the flue gas blower.

Pressure controllers associated with the pressure maintenance valve in certain embodiments disclosed herein may thus receive as a set point the pressure that would be necessary to discharge the flue gas via the exhaust stack, i.e. via the individual or common flue gas release unit, to the environment under the condition that the flap in the exhaust stack would be open and the pressure maintenance valve would be closed, which corresponds to the pressure that would prevail if no carbon removal unit were installed. Irrespective of the specific control or regulation strategy, therefore, the atmospheric back pressure and possible further elements generating counter pressures are "simulated" in the method as proposed herein. This control strategy has surprisingly been found advantageous over other control strategies tested by the applicant in simulation studies. It could be demonstrated that with the proposed concept, in particular an operational fault of the flue gas blower does not necessarily lead to a malfunction of the emitters (such as cracking furnaces).

In certain embodiments as proposed herein, the individual flue gas ducts are equipped with water injection units which are each operated on the basis of a temperature of the flue gases in the individual flue gas ducts. Injected process water may be balanced by water used in a downstream direct contact cooler. A particular advantage of such embodiments is that a pressure control may be decoupled from a temperature control almost completely, allowing a more flexible operation.

In certain embodiments as proposed herein, said operation of the water injection units is performed using a first control unit and/or said controlling the flue gas duct pressures is performed using one or more second control units and/or said adjusting the pressure in the flue gas collecting duct is performed using one or more third control units. Such control units can advantageously be coupled or coordinated in a synthesized control strategy or corresponding controllers, such as cascade controllers.

In certain embodiments as proposed herein, at least two of the control units just mentioned are used and operated using a synthesized control process, including or not including the temperature control strategy mentioned.

In certain embodiments as proposed herein, the carbon dioxide removal arrangement comprises the direct contact cooler mentioned, and process water may be passed from the direct contact cooler to the water injection units. This allows for a single process water circuit to be realized according to certain embodiments.

In certain embodiments as proposed herein, the carbon dioxide removal arrangement comprises a scrubbing unit. Scrubbing units, particularly using amine scrubbing media or absorbents, are well tested and reliable means of removing carbon dioxide from gaseous streams, particularly flue gas streams.

In certain embodiments as proposed herein, each of the carbon dioxide emitters is independently selected from the group comprising a steam cracking furnace, a reforming furnace, a dehydrogenation unit, a water gas shift unit, a steam boiler, a gas turbine unit and a power generating unit, wherein a power generating unit may be a special form of gas turbine unit. Aspects disclosed herein, therefore, are applicable for a large number of different process units and corresponding networks.

In certain embodiments as proposed herein, the flue gas flaps are opened when a pressure in the individual flue gas ducts is above a pressure threshold and are closed below said pressure threshold. This means that when a pressure raising above a safe value, flue gas may be vented to the atmosphere.

In case of a failure in the temperature control as mentioned above, i.e. quenching of flue gas by process water, which may result in a temperature of the flue gas exceeding a design temperature of the common flue gas duct, the individual emitters can be also switched to atmosphere instead to the common flue gas duct.

In certain embodiments as proposed herein, said adjusting the pressure in the flue gas collecting duct is performed by adjusting a speed and/or a guide grille or inlet guide vane of the flue gas blower. This is a particularly reliable way of pressure regulation.

The process plant network provided herein is configured for removing carbon dioxide emitted from a plurality of carbon dioxide emitters. The carbon dioxide emitters comprise individual flue gas ducts operable at individual flue gas duct pressures. Each of the individual flue gas ducts is connected via a pressure maintaining valve to a common flue gas collecting duct. Each of the individual flue gas ducts is connected via a flue gas flap to an individual or common flue gas release unit. The flue gas collecting duct is connected to a carbon dioxide removal arrangement including a flue gas blower, as explained above.

The process plant network is configured for controlling flue gas duct pressures in the individual flue gas ducts by operating the pressure maintaining valves using flue gas duct pressure set values, the flue gas duct pressure set values corresponding to pressures corresponding to pressures required to release the respective flue gas via the individual or common flue gas release unit at an opened state of the respective flue gas flap and a closed state of the respective pressure maintaining valve. The process plant network provided herein is further configured adjusting a pressure in the flue gas collecting duct by operating the flue gas blower.

As to further details and advantages of such a process plant network, reference is made to the explanations above in regarding the method proposed herein and its different embodiments. Particularly, such a process plant network may, in embodiments as proposed herein, be operated using a method according to any of the embodiments as discussed herein.

### Figures

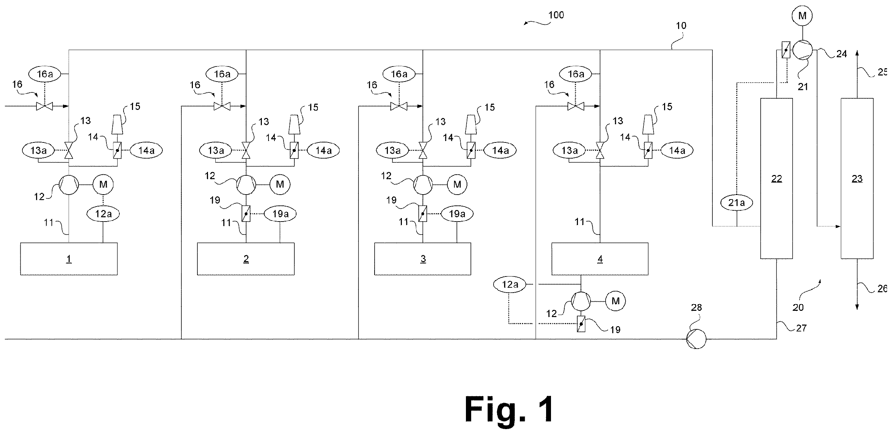

Embodiments as disclosed herein will now be described, by way of example only, with reference to accompanying drawings, in which
Figure 1 illustrates a process plant network according to an embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Embodiments as disclosed herein particularly pertain to processes using reactors comprising heated reaction tubes which are arranged in a reaction chamber heated by combusting a fuel (also referred as "furnaces").

Examples of such processes are steam cracking, various reforming processes, in particular steam reforming, dry reforming (carbon dioxide reforming), mixed reforming processes, and processes for the dehydrogenation of alkanes. In steam cracking, the reaction tubes are passed through the reactor in the form of coils, which typically have at least one reverse bend in the reactor, whereas in steam reforming, tubes are typically used which run through the reactor without a reverse bend. Embodiments as disclosed herein may also be used in connection with so-called "millisecond" or single-pass reactors which are characterized by very low dwell times.

Further applications of embodiments proposed herein are reactors for performing a reverse water gas shift reaction of carbon dioxide and hydrogen to form carbon monoxide and water, a dehydrogenation of oxygenates such as a reaction of methanol to formaldehyde and hydrogen, cracking of ammonia to yield nitrogen and hydrogen, dehydrogenation of so-called liquid organic hydrogen carriers as known in the field concerned, and reforming of methanol and glycerol.

Embodiments as proposed herein may be suitable for all such processes and different types of reaction tubes or reactors. Purely by way of illustration, and regarding further details of technical solutions known, reference is made to the articles "Ethylene", "Gas Production" and "Propene" in Ullmann's Encyclopedia of Industrial Chemistry, for example the publications dated April 15, 2009, DOI: 10.1002/14356007.a10_045.pub2, December 15, 2006, DOI: 10.1002/14356007.a12_169.pub2, and June 15, 2000, DOI: 10.1002/14356007.a22_211. The terminology used herein corresponds, unless defined otherwise, to what is customary in the field. Hereinbelow, the term "carbon dioxide emitter" is used for such furnaces and other fired units, such as steam boilers.

In combustion processes involved in the processes indicated above, flue gases are produced whose energy is utilised and which must subsequently be released. According more conventional solutions, the flue gas is released into the atmosphere. However, this is associated with the release of greenhouse gases that are harmful to the climate. This is prevented by collecting and sequestering carbon dioxide from flue gas. As part of the energy transition, carbon dioxide can even be turned into a valuable raw material that can be used to produce climate-neutral hydrocarbons, methanol, dimethyl ether or similar by reducing it with regeneratively produced hydrogen, for example. For this reason, flue gases should be reutilised.

Embodiments as proposed herein include carbon dioxide scrubbing using amine solutions ("amine scrubbing") already mentioned at the outset. Carbon dioxide removal including amine scrubbing typically involves cooling flue gas in a so-called direct contact cooler and then transferred to an amine scrubber by means of a blower ("flue gas blower"). An example of such a process is shown, for example, in an article by J. Husebye et al., "Techno economic evaluation of amine based CO2 capture: impact of CO2 concentration and steam supply", Energy Procedia 23 (2012) 381-390, Figure 1.

In large interconnected sites, it may, as mentioned at the outset already, to collect flue gas from several carbon dioxide emitters and process the common stream further. However, such an arrangement is susceptible to operational faults. The flue gas flows are typically very large and the collection arrangement has typically only a small storage volume, so that system malfunctions quickly lead to the pressure in individual furnaces rising beyond the acceptable level and the furnaces having to be shut down by means of a shutdown device.

If such a case occurs, in which flue gas can no longer be transported via the manifold, the furnaces must be switched immediately to conventional operation with the flue gases being released into the atmosphere. This requires switching operations of large valves, which cannot be switched as quickly as required. For this reason, the manifold and its instrumentation must be designed to be more reliable.

In the processes mentioned above, combustion air is required for firing besides the fuel. For this purpose, a furnace blower may be used to generate a slight negative pressure and ambient air is then drawn in via registers. The furnace blower emits the flue gas containing carbon dioxide into the environment via a chimney ("exhaust stack"). The pressure is regulated by changing the speed of the furnace blower or via adjustable guide grilles on the furnace blower.

To ensure operational safety, the furnace must be switched off if the underpressure is insufficient or if the pressure is too low. Typical pressures used for switching valves or differential pressure switches are at -6 mbar gauge pressure for the pressure switch low low (PSLL) value and 0 mbar gauge for the pressure switch high high (PSHH) value, or in the range from -10 to -15 mbar gauge for PSLL.

The combination of the furnace technology described above with an amine scrubber requires a new control solution, because the back pressure of the furnace blower is no longer the atmospheric pressure, but is controlled by the flue gas blower of the amine scrubber. A further reason is that, in practice, flue gas from several furnaces or other emitters (e.g. steam boilers) is collected in a common flue gas duct, resulting in operation-dependent fluctuations in pressure losses in the flue gas duct and pressure fluctuations at the individual emitter connection points. Furthermore, more rapid fluctuations in the back pressure at the furnace blowers cannot be regulated via the performance control of the furnace blower (via a guide grille or inlet vane or the blower speed). This also applies in particular to malfunction scenarios such as the shutdown of individual emitters or the failure of the amine scrubber. Additionally, the flue gas flow changes significantly as soon as the steam cracker is operated at partial load (i.e. not all furnaces or boilers are in operation). The risk of an inadequate control solution is a reduction in the availability of the entire system due to the malfunction of individual components of the carbon dioxide capture system.

Figure 1 illustrates a process plant network according to an embodiment proposed herein which is designated with reference numeral 100. As mentioned above, Figure 1 likewise illustrates a corresponding method.

Process plant network 100 comprises a plurality of carbon dioxide emitters 1, 2, 3, 4 of a type extensively discussed above. The carbon dioxide emitters 1, 2, 3, 4 are connected with individual flue gas ducts 11 operated at individual flue gas duct pressures, which may be adjusted in a number of different ways illustrated for carbon dioxide emitters 1, 2, 3, 4 of process plant network 100 shown in Figure 1.

For carbon dioxide emitter 1, a furnace blower 12 is provided in the flue gas duct 11, which is operated with a motor M and which provides a slight negative pressure upstream. This pressure is regulated using a pressure regulator 12a. A different way is illustrated for carbon dioxide emitter 2, where likewise a furnace blower 12 is provided in the flue gas duct 11, which is operated with a motor M and which provides a slight negative pressure upstream. However, this pressure is adjusted using a flap 19 in the flue gas duct 11 which is connected with a pressure regulator 19a. This is also the case for carbon dioxide emitter 3. A yet further solution is illustrated for carbon dioxide emitter 4 where a furnace blower 12 is provided upstream thereof, using a flap 19 and a similar control arrangement as explained for carbon dioxide emitter 3.

In all cases, an overpressure may be generated in the flue gas ducts downstream of the furnace blowers 12. This overpressure is maintained at a certain value, herein referred to as a flue gas duct pressure, using pressure maintaining valves 13. Each of the individual flue gas ducts 11 is connected via one pressure maintaining valve 13 to a common flue gas collecting duct 10. Pressure maintaining valves 13 are controlled using pressure controllers 13a on the basis of the pressure upstream thereof.

Furthermore, each of the individual flue gas ducts 11 is connected via a flue gas flap 14 to an individual (as shown in Figure 1) or common flue gas release unit 15 in the form of, e.g., a chimney or stack, potentially equipped with further units such as a selective catalytic or non-catalytic reduction unit, filters or the like.

The flue gas collecting duct 10 is connected to a carbon dioxide removal arrangement, which is indicated 20 in its entirety, which includes a flue gas blower 21 and driven by a motor M on the basis of a pressure controller 21a. Flue gas blower 21 is controlled in the manner indicated above by a pressure controller 21a.

The carbon dioxide removal arrangement 20 further comprises a direct contact cooler 22 operated with process water, and a scrubbing unit 23, both units having been described above and/or being generally known in the field. A cooled flue gas stream is indicated with reference numeral 24, and a flue gas stream depleted from carbon dioxide is indicated with reference numeral 25. A carbon dioxide stream 26 may be passed on to further processing and/or sequestration steps.

A stream 27 of process water may be from the direct contact cooler 22 to water injection units 16 associated with the flue gas ducts 11 which are each operated on the basis of a temperature of the flue gases in the individual flue gas ducts 11 using suitable control units 16a in each case.

As proposed herein, flue gas duct pressures in the individual flue gas ducts 11 are controlled by operating the pressure maintaining valves 13, the flue gas duct pressures corresponding to pressures required to release the respective flue gas via the individual or common flue gas release unit 15 at an opened state of the respective flue gas flap 14 and a closed state of the pressure maintaining valves 13. Furthermore, a pressure in the flue gas collecting duct 10 is adjusted by operating the flue gas blower 21 in the manner as indicated above.

## Claims

1. A method of recovering carbon dioxide from flue gases of a plurality of carbon dioxide emitters (1, 2, 3, 4) of a process plant network (100),
wherein the carbon dioxide emitters (1, 2, 3, 4) are connected with individual flue gas ducts (11) operated at individual flue gas duct pressures,
wherein each of the individual flue gas ducts (11) is connected via a pressure maintaining valve (13) to a common flue gas collecting duct (10),
wherein each of the individual flue gas ducts (11) is connected via a flue gas flap (14) to an individual or common flue gas release unit (15),
wherein the flue gas collecting duct (10) is connected to a carbon dioxide removal arrangement (20) including a flue gas blower (21),
wherein the method comprises controlling flue gas duct pressures in the individual flue gas ducts (11) by operating the pressure maintaining valves (13) using flue gas duct pressure set values, the flue gas duct pressure set values corresponding to pressures required to release the respective flue gas via the individual or common flue gas release unit (15) at an opened state of the respective flue gas flap (14) and a closed state of the respective pressure maintaining valve (13), and
wherein the method further comprises adjusting a pressure in the flue gas collecting duct (10) by operating the flue gas blower (21).

2. The method according to claim 1, wherein the individual flue gas ducts (11) are equipped with water injection units (16) which are each operated on the basis of a temperature of the flue gases in the individual flue gas ducts (11).

3. The method according to claim 2, wherein said operation of the water injection units (16) is performed using a first control unit and/or wherein said controlling the flue gas duct pressures is performed using one or more second control units (13a, 21a) and/or wherein said adjusting the pressure in the flue gas collecting duct (10) is performed using one or more third control units.

4. The method according to claim 3, wherein at least two of the control units are used and operated using a synthesized control process.

5. The method according to any one of claims 2 to 4, wherein the carbon dioxide removal arrangement (20) comprises a direct contact cooler (22).

6. The method according to claim 5, wherein process water is passed from the direct contact cooler (22) to the water injection units (16).

7. The method according to any one of claims 2 to 6, wherein the carbon dioxide removal arrangement (20) comprises a scrubbing unit (23).

8. The method according to any one of the preceding claims, wherein each of the carbon dioxide emitters (1, 2, 3, 4) is independently selected from the group comprising a steam cracking furnace, a reforming furnace, a dehydrogenation unit, a water gas shift unit, a steam boiler, a gas turbine unit and a power generating unit.

9. The method according to any one of the preceding claims, wherein the flue gas flaps (14) are opened when a pressure in the individual flue gas ducts (11) is above a pressure threshold and are closed below said pressure threshold.

10. The method according to any one of the preceding claims, wherein the flue gas flaps (14) are opened when a temperature in the individual flue gas ducts (11) or downstream thereof is, or is predicted to be, above a temperature threshold and are closed below said temperature threshold.

11. The method according to any one of the preceding claims, wherein said adjusting the pressure in the flue gas collecting duct (10) is performed by adjusting a speed and/or a guide grille or inlet vane of the flue gas blower (21).

12. A process plant network (100) configured for removing carbon dioxide emitted from a plurality of carbon dioxide emitters (1, 2, 3, 4),
wherein the carbon dioxide emitters (1, 2, 3, 4) comprise individual flue gas ducts (11) operable at individual flue gas duct pressures,
wherein each of the individual flue gas ducts (11) is connected via a pressure maintaining valve (13) to a common flue gas collecting duct (10),
wherein each of the individual flue gas ducts (11) is connected via a flue gas flap (14) to an individual or common flue gas release unit (15),
wherein the flue gas collecting duct (10) is connected to a carbon dioxide removal arrangement (20) including a flue gas blower (21),
wherein the process plant network (100) is configured for controlling flue gas duct pressures in the individual flue gas ducts (11) by operating the pressure maintaining valves (13) using flue gas duct pressure set values, the flue gas duct pressure set values corresponding to pressures required to release the respective flue gas via the individual or common flue gas release unit (15) at an opened state of the respective flue gas flap (14) and a closed state of the respective pressure maintaining valve (13), and
wherein the process plant network (100) is configured adjusting a pressure in the flue gas collecting duct (10) by operating the flue gas blower (21).

13. The process plant network (100) according to claim 12, configured for performing a method according to any one of claims 1 to 11.
